# EUROPEAN PATENT SPECIFICATION

(11) **EP 1 192 528 B1**
(45) Date of publication and mention of the grant of the patent: **26.03.2003**
(21) Application number: 00939610.2
(22) Date of filing: 06.06.2000
(51) Int. Cl.: G06F 3/06

(54) **INTELLIGENT STORAGE AREA NETWORK**
INTELLIGENTES SPEICHERBEREICHSNETZWERK
RESEAU A ZONES DE MEMOIRE INTELLIGENTES

(30) Priority: 11.06.1999 US 330960
(43) Date of publication of application: 03.04.2002
(73) Proprietor: Storage Technology Corporation, Louisville, CO 80028-4309 (US)
(72) Inventor: BAKKE, Mark, A., Maple Grove, MN 55369 (US); FIORE, Edward, J., Ramsey, MN 55303 (US); GUHA, Aloke, Louisville, CO 80027 (US); HINTON, Walter H., Westminster, CO 80030 (US); STAMAS, Bradley, Maple Grove, MN 55311 (US)
(74) Representative: Gill, David Alan
(86) International application number: US0015579
(87) International publication number: WO00077606

(56) References cited:
- WO-A-98/40810
- JANDER M: "LAUNCHING STORAGE-AREA NET" DATA COMMUNICATIONS,US,MCGRAW HILL. NEW YORK, vol. 27, no. 4, 21 March 1998 (1998-03-21), pages 64-72, XP000740968 ISSN: 0363-6399
- CHRISTENSEN B: "BUILDING A STORAGE-AREA NETWORK SANS BOOST PERFORMANCE, REALIBILITYAND SCALABILITY OF THE CRITICAL LINK BETWEEN SERVERS AND STORAGE DEVICES" DATA COMMUNICATIONS,US,MCGRAW HILL. NEW YORK, vol. 27, no. 6, 21 April 1998 (1998-04-21), pages 67-70,74, XP000751733 ISSN: 0363-6399

## Description

### TECHNICAL FIELD

The present invention relates to storage area networks interconnecting host computers and storage devices.

### BACKGROUND ART

An increase in the demand for storage coupled with a decrease in the cost per bit of storage has greatly increased the amount of storage accessible within a computer system. Adequate performance in traditional computer systems, in which storage is directly connected to the host, is difficult to achieve with increasing storage volume. A significant amount of host resources are spent managing storage devices as well as in setting up storage access through the host. Human resources are also expended managing storage allocation, configuration, ad the like. Storage management problems may be worsened when hosts are interconnected, such as through a LAN, where each host may receive requests for storage access from clients connected through other hosts. These clients may be operating under different protocols or operating systems, such as Microsoft WINDOWS NT or UNIX, may expect data in varying formats, may expect storage with particular performance specifications, or may expect to be connected to a particular storage device type. An additional problem arises when a host fails, decoupling connected storage devices from the rest of the computer system.

A proposed solution to these problems is the storage area network (SAN). A SAN interconnects one or more hosts with a plurality of storage devices. Depending upon the configuration, SANs may decrease traffic on the LAN, may ease data compatibility requirements, and may provide for graceful degradation in the event of a host failure. SANs may be implemented using high speed connections such as a 100 megabyte per second Fibre Channel loop.

A challenge in the design of a SAN is the location and configuration of control operations needed to set up and tear down storage connections, arbitrate storage access, and manage storage devices. In one design, SAN management resides in one or more hosts. A managing host controls access to a subset of storage devices connected to the SAN. Problems with this technique include resource burdens for managing the SAN and reliability in the event of a host failure. Another control design option is to place intelligence in storage devices connected to the SAN. Each storage device is responsible for arbitrating access to data stored within the storage device. Problems with this design include the need to support multiple protocols in heterogenous computer systems, the difficulty in selecting appropriate storage devices to handle initial storage requests, and the difficulty in finding the appropriate provider for desired services.

WO-A-98/40810 discloses a network attached virtual tape storage subsystem including at least one processor, at least one switch defining at least one data network, a plurality of storage devices and at least one manager for managing storage of data on the said plurality of storage devices, but in which problems are encountered with regard to the location and configuration of control operations for enabling/disabling the arbitration of storage access, and for managing storage devices.

What is needed is a SAN system that can manage access requests from heterogenous hosts having different protocols to distributed heterogenous storage devices. Management tasks should not present a substantial burden to host processors or storage administrators. Data should be held in storage devices using a format best suited to each storage device and presented to each host in response to an access request in a format best suited to the host.

It is an object of the present invention to place storage management within the SAN.

It is another object of the present invention to manage distributed heterogenous storage.

It is another object of the present invention to support access requests from hosts with multiple protocols.

It is still another object of the present invention to present data to each host in an acceptable format.

It is yet another object of the present invention to reduce host resource requirements for storage access and management.

It is a further object of the present invention to examine storage devices to determine appropriate configurations for satisfying storage access requests.

It is a still further object of the present invention to provide centralized access to management services.

According to one aspect of the present invention there is provided a storage area network comprising:
at least one interconnection network;
a plurality of storage devices, each storage device connected to at least one of the at least one interconnection network;
a plurality of host computer systems, each host connected to at least one of the at least one interconnection network, each host operative to access data on at least one of the storage devices in a specified data format characterized by:
   at least one presenter connected to at least one of the at least one interconnection network, each presenter operative to present data to at least one host computer system in the host computer specified data format; and
   at least one manager connected to at least one of the at least one interconnection network, each manager operative to process a storage access request.

In carrying out the above objects and other objects and featured of the present invention, a storage area network is provided. The SAN includes at least one interconnection network. Storage devices and host computer systems are connected to at least one network. Each host can access data on one or more storage devices in a host specified data format. At least one presenter is connected to at least one network. Each presenter presents data to a host computer system in the host computer specified data format. At least one manager is connected to at least one of the networks. Each manager processes a storage access request. Access request processing may include receiving a storage access request, determining a response to the request based on an examination of one or more storage devices, and forwarding the response.

In an embodiment of the present invention, the manager resolves conflicts between hosts requesting access to the same storage device. The manager may also allocate physical space on one or more storage devices in response to the received storage access request.

In another embodiment of the present invention, the storage area network includes at least one mover connected to one or more networks. Each mover reads data from one or more storage devices and writes the data into one or more storage devices. The manager receives a request to move data, examines the storage devices, and determines one or more movers to perform the data move request. In a refinement, at least one storage device is connected to at least one network through a mover.

In yet another embodiment of the present invention, the manager receives a request to modify storage allocation from a host connected through a presenter. The manager examines one or more storage devices and determines allocation of physical space on the storage devices satisfying the received request. The manager notifies the presenter through which the host is connected of the determined allocation.

In a further embodiment of the present invention, the at least one network includes one or more data networks for carrying data between hosts and storage devices and one or more communication networks transporting storage access requests to the manager. In a refinement, a user interface communicates with the manager through the communication network.

In a still further embodiment of the present invention, the manager provides a plurality of services to the hosts. One of the services is a location service permitting a host to find the remaining services.

According to another aspect of the present invention there is provided a storage area network comprising:
at least one switch defining at least one data network;
a communication network;
a plurality of storage devices, each storage device storing data in a storage format;
a plurality of hosts, each host connected to at least one storage device through at least one of the at least one data networks, each host connected to the communication network, each host accessing data in a host format; characterized by
at least one presenter connected to at least one of the at least one data network and the communication network, each presenter operative to convert data between at least one storage format and at least one host format; and
at least one manager connected to the communication network, each manager operative to process a storage access request.

Thus a storage area network is also provided which includes at least one switch defining at least one data network. The storage area network also includes a communication network. Storage devices and hosts are interconnected through at least one of the data networks. Each host is also connected to the communication network. At least one presenter is connected to at least one data network and the communication network. A manager is connected to the communication network. The manager receives a storage access request originating in a host. The manager examines the storage devices and determines a response to the request. The response is forwarded to the originating host.

The above objects and other objects, features, and advantages of the present invention are readily apparent from the following detailed description of the best mode for carrying out the invention when taken in connection with the accompanying drawings.

### BRIEF DESCRIPTION OF DRAWINGS

FIGURE 1 is a schematic diagram of a generalized intelligent SAN according to an embodiment of the present invention;
FIGURE 2 is a schematic diagram of an intelligent SAN implemented using a crossbar switch according to an embodiment of the present invention;
FIGURE 3 is a schematic diagram of an intelligent SAN implemented using a crossbar hub with associated processors according to an embodiment of the present invention; and
FIGURE 4 is a schematic diagram of an intelligent SAN implemented using a Fibre Channel switch hub according to an embodiment of the present invention.

### BEST MODE FOR CARRYING OUT THE INVENTION

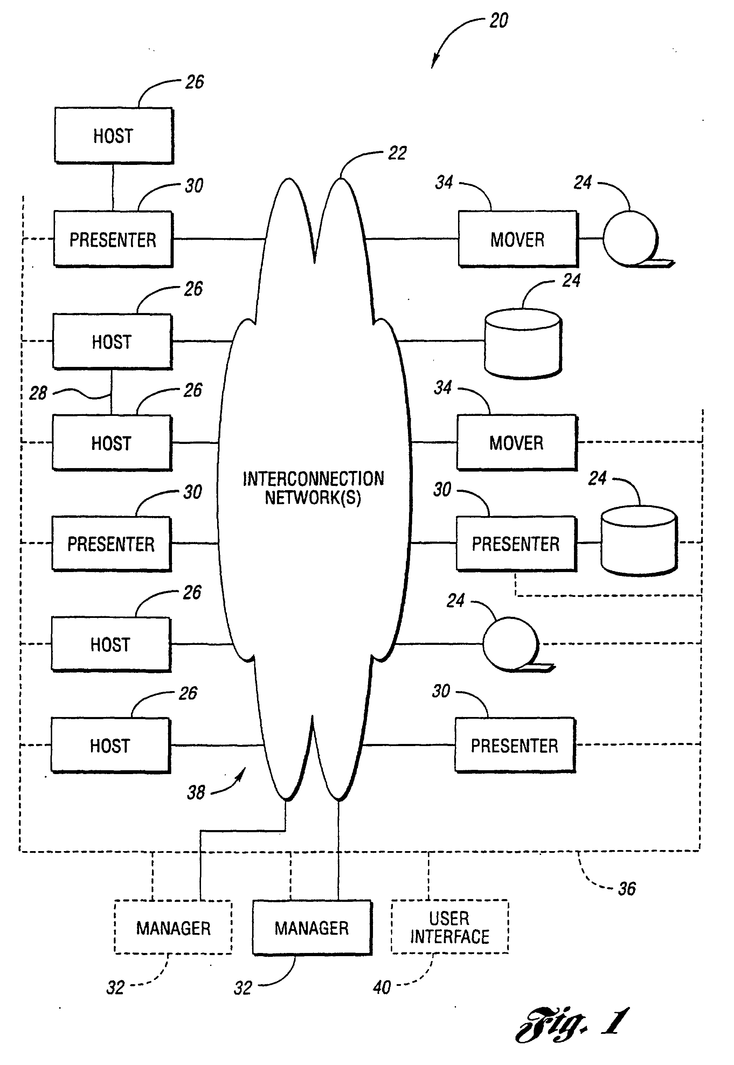

Referring to Figure 1, a schematic diagram of a generalized intelligent SAN according to an embodiment of the present invention is shown. An intelligent SAN, shown generally by 20, includes one or more interconnection networks 22. A plurality of storage devices, each of which is indicated by 24, is connected to at least one of the interconnection networks 22. Storage devices 24 include magnetic disks, magnetic tape, optical disks, solid state memory, and the like. A plurality of host computer systems, each of which is designated as 26, are also connected to one or more of interconnection networks 22. Interconnection networks 22 permit each host 26 to access data on at least one storage device 24 in a host specified data format. Hosts 26 may be interconnected by interconnection network 28, such as a LAN, which is not part of any interconnection network 22.

Intelligent SAN 20 also includes at least one presenter 30 connected to one or more of interconnection networks 22. Each presenter 30 presents data to at least one host 26 in the host computer specified data format. Thus, host 26 accessing data through presenter 30 need not know or be concerned with the data structure used for each storage device 24. Host 26 may be connected to interconnection networks 22 through presenter 30 or may access presenter 30 through a direct connection to interconnection networks 22. Host 26 may also include presenter 30.

Intelligent SAN 20 further includes at least one manager 32 connected to one or more interconnection networks 22. Each manager 32 receives a storage access request, examines at least one storage device 24, determines a response based on the examination, and forwards the response. Typically, the access request comes from host 26 and the subsequent response is forwarded to requesting host 26. Host 26 may then directly access storage device 24. Manager 32 may be part of interconnection network 22, may be integrated into host 26, or may be separate from interconnection network 22 and host 26.

In an embodiment of the present invention, manager 32 resolves conflicts between hosts 26 requesting access to the same storage device. For example, only one host 26 can typically access a tape storage device 24 at one time. If multiple hosts request the same tape storage device 24, manager 32 determines which host 26 will be granted access.

In an embodiment of the present invention, manager 32 allocates physical space on one or more storage devices 24 in response to the received storage access request. The request may include certain parameters including amount of storage required, access time, data transfer rate, cost per megabit, relative reliability, and the like. Manager 32 attempts to find one or more storage devices 24 which best meets the specified parameters. A suitable method for allocating storage devices 24 is disclosed in U.S. patent application Serial No. 09/232,431 entitled "Intelligent Storage Data Manager" to Mark A. Bakke *et al.,* filed January 15, 1999, which is incorporated by reference herein. If host 26 is connected through presenter 30, presenter 30 is notified of the determined allocation on storage devices 24.

In an embodiment of the present invention, intelligent SAN 20 includes at least one mover 34. Each mover 34 reads data from at least one storage device 24 and writes the data into at least one storage device 24. Manager 32 receives a request to move data, examines at least one storage device 24, and determines at least one mover 34 to perform the data move request. Mover 34 relieves host 26 from performing data transfer requests such as tape backup, defragmentation, and the like. One or more storage devices 24 may be connected to interconnection networks 22 through mover 34. Mover 34 may also access storage device 24 which is directly connected to interconnection networks 22.

In a preferred embodiment of the present invention, interconnection networks 22 are split into one or more communication networks 36 for transporting storage access requests to manager 32 and one or more data networks 38 for carrying data between hosts 26 and storage devices 24. Each data network 38 is a high speed network such as Fibre Channel, Small Computer System Interface (SCSI), Intelligent Peripheral Interface (IPI), High Performance Parallel Interface (HPPI), Framing Protocol, Internet Protocol (IP), ATM Adaption Layer for computer Data (AAL5), Link Encapsulation (FC_LE), Single Byte Command Code Set Mapping (SBCCSM), IEEE 802.2, and the like. Each communication network 36 typically has a lower bandwidth than data networks 38 and may be, for example, Ethernet implementing TCP/IP protocol. If more than one communication network 36 is used, each network has at least one manager 32. Managers 32 on separate communication networks 36 are interconnected to permit communication between managers 32. More than one manager 32 may be placed on each communication network 36 to provide redundancy or to provide different services.

In an embodiment of the present invention, user interface 40 is connected to at least one communication network 36. User interface 40 permits a SAN administrator the ability to monitor and control at least one manager 32.

In various embodiments of the present invention, manager 32 performs a variety of services. Manager 32 controls data network 38, establishing and breaking connections to form subnetworks within and connections through interconnection networks 22. Manager 32 provides conflict resolution, storage space allocation, data transfer scheduling, and monitors the health of interconnection networks 22.

Manager 32 may provide a centralized location service by which host 26 can access other service provided by manager 32, presenter 30, mover 34, and storage device 24. Therefore, host 26 need not maintain and update a list of services and service locations.

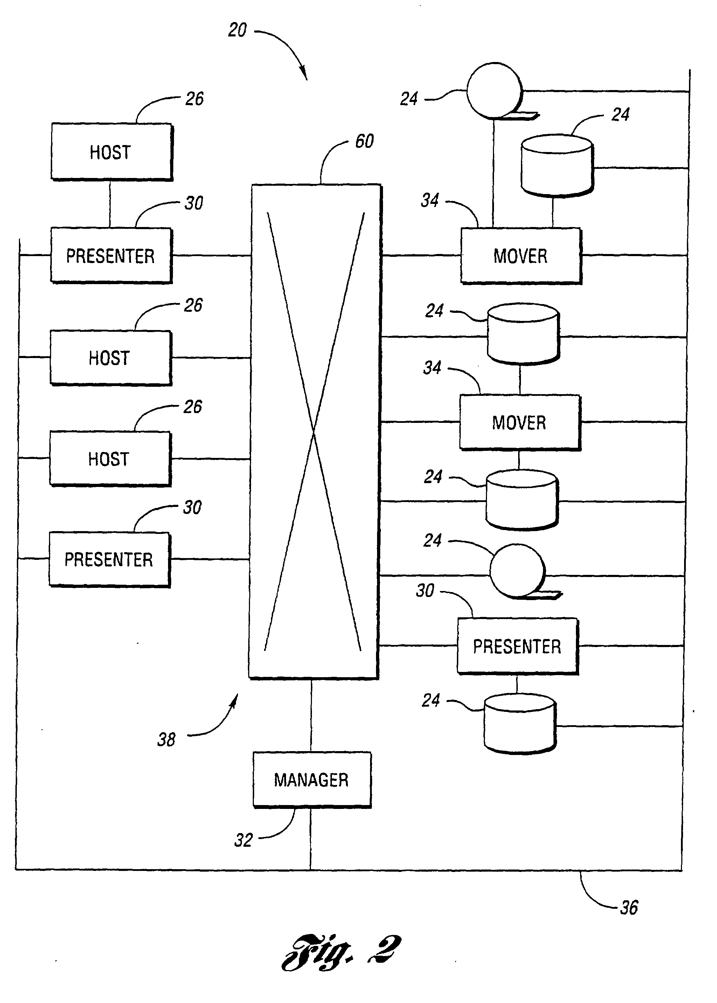

Referring now to Figure 2, a schematic diagram of an intelligent SAN implemented using a crossbar switch according to an embodiment of the present invention is shown. Data network 38 is implemented using at least one crossbar switch 60. Crossbar switch 60 may be implemented using a Fibre Channel switch such as, for example, the SILKWORM SWITCH from Brocade Communication Systems, Inc. of San Jose, California.

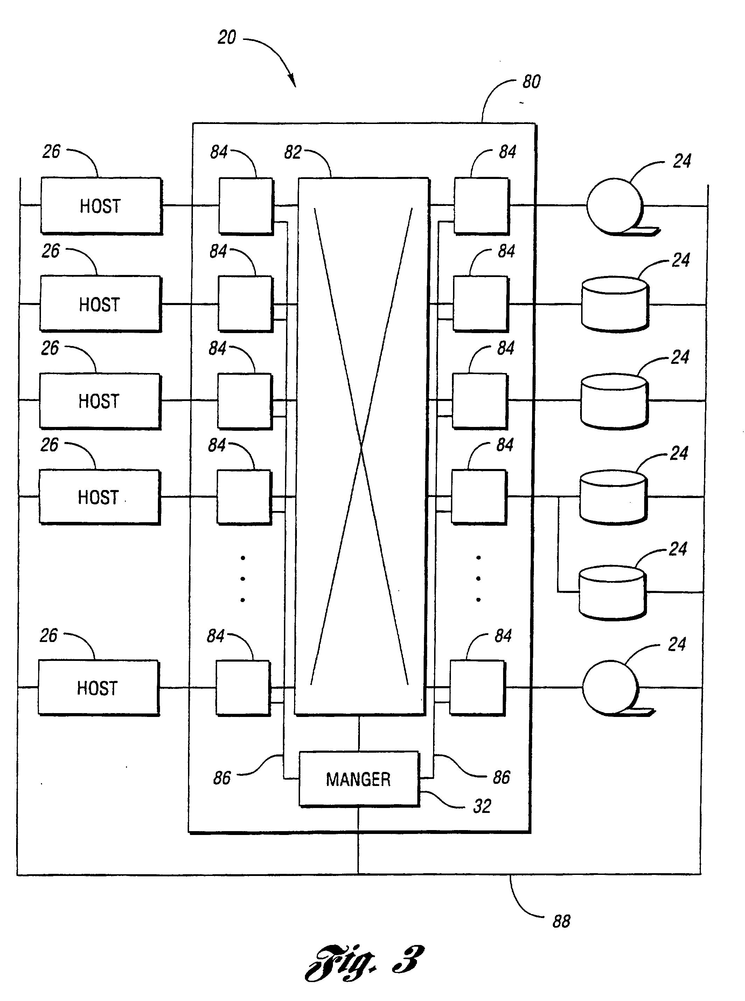

Referring now to Figure 3, a schematic diagram of an intelligent SAN implemented using a crossbar with associated processors according to an embodiment of the present invention is shown. Crossbar 80 includes crossbar switch 82 which functions in a manner similar to crossbar switch 60 to interconnect any two or more of processors 84. Each processor 84 is connected to one or more hosts 26 through a high speed channel such as Fibre Channel, SCSI, or the like, or to one or more storage devices 24 through a high speed channel such as Fibre Channel, SCSI, ESCON, or the like. Each processor 84 handles real-time forwarding, conversion, and transformation of data passed between host 26 and storage device 24. Each processor 84 may be further programmed to function as presenter 30, mover 34, or both.

In a preferred embodiment, crossbar 80 includes manager 32 connected to each processor 84 through internal communication network 86, typically implemented as an Ethernet network implementing TCP/IP protocols. Manager 32 may also be connected to hosts 26 and storage devices 24 through external communication network 88 also implemented using Ethernet.

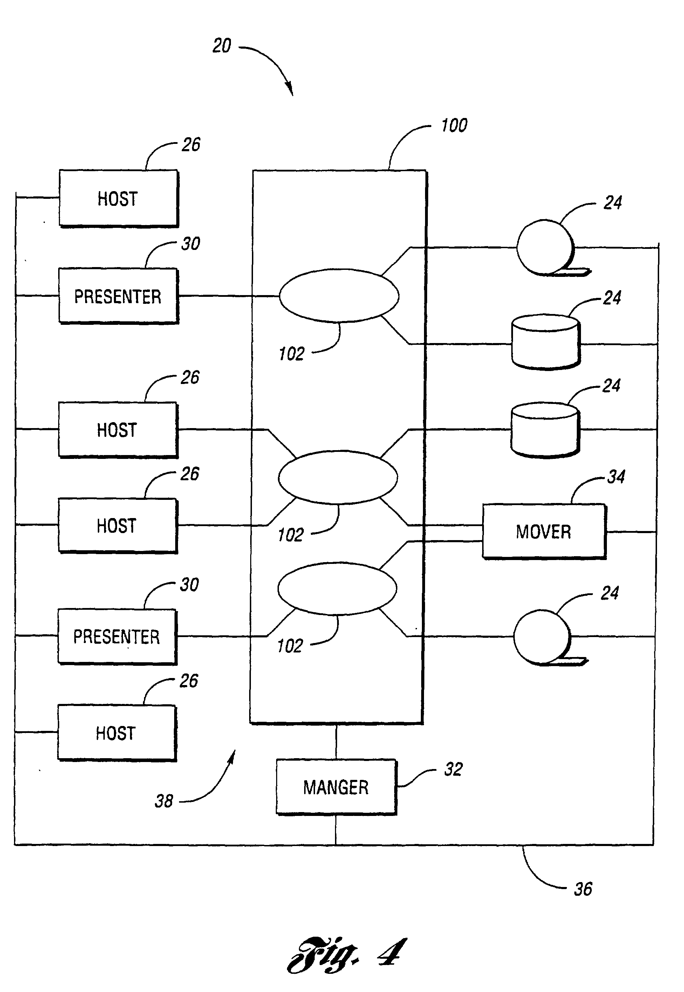

Referring now to Figure 4, a schematic diagram of an intelligent SAN implemented using a Fibre Channel switch hub according to an embodiment of the present invention is shown. Storage devices 24, hosts 26, presenters 30, and movers 34 are connected to switch hub 100 through Fibre Channel ports. Manager 32 forms one or more sub-loops 102 in response to access requests from hosts 26.

It should be appreciated that the invention is not restricted to the details of the above-mentioned embodiments. One aspect of the invention is a storage area network as defined in independent claims 1 and 14.

## Claims

1. A storage area network (20) comprising:
at least one interconnection network (22);
a plurality of storage devices (24), each storage device (24) connected to at least one of the at least one interconnection network (22);
a plurality of host computer systems (26), each host (26) connected to at least one of the at least one interconnection network (22), each host (26) operative to access data on at least one of the storage devices (24) in a specified data format, and
**characterized by**:
at least one presenter (30) connected to at least one of the at least one interconnection network (22), each presenter (30) operative to present data to at least one host computer system (26) in the host computer specified data format; and
at least one manager (32) connected to at least one of the at least one interconnection network (22), each manager (32) operative to process a storage access request.

2. A storage area network (20) as in Claim 1, wherein storage access requests are processed by the at least one manager (32) operative to:
receive a storage access request,
examine at least one of the plurality of storage devices (24),
determine a response to the request based on the examination, and forward the response.

3. A storage area network (20) as in Claim 1, wherein the at least one manager (32) is further operative to resolve conflicts between multiple hosts (26) requesting access to the same storage device (24).

4. A storage area network (20) as in Claim 1, wherein the at least one manager (32) is further operative to allocate physical space on at least one storage device (24) in response to the received storage access request.

5. A storage area network (20) as in Claim 1, further comprising at least one mover (34) connected to at least one of the at least one interconnection network, each mover (34) operative to read data from at least one of the storage devices (24) and write the read data into at least one of the storage devices (24), the at least one manager (32) further operative to:
receive a request to move data,
examine at least one of the plurality of storage devices (24); and
determine at least one mover (34) to perform the data move request.

6. A storage area network (20) as in Claim 5, wherein at least one storage device (24) is connected to at least one network (22) through at least one mover (34).

7. A storage area network (20) as in Claim 1, wherein at least one storage device (24) is connected to at least one network (22) through at least one presenter (30).

8. A storage area network (20) as in Claim 1, wherein at least one host (26) is connected to at least one network (22) through at least one presenter (30).

9. A storage area network (20) as in Claim 8, wherein the manager (32) is further operative to:
receive a request to modify storage allocation from the at least one host (26) connected through at least one presenter (30);
examine at least one of the storage devices (24)
determine allocation of physical space on the at least one examined storage device (24) satisfying the received request to modify storage allocation; and
notify the at least one presenter (30) through which the at least one requesting host is connected of the determined allocation.

10. A storage area network (20) as in Claim 1, wherein the at least one interconnection network (22) comprises:
at least one data network (38) operative to carry data between the hosts (26) and the storage devices (24); and
at least one communication network (36) operative to transport the storage access request to the manager (32).

11. A storage area network (20) as in Claim 10, further comprising a user interface (40) in communication with the at least one manager (32) through the at least one communication network (36).

12. A storage area network (20) as in Claim 1, wherein the at least one manager (32) is operative to provide a plurality of services to at least one host (26), one of the services being a location service permitting the at least one host (26) to find the remaining services.

13. A storage area network (20) as in Claim 1, wherein the storage access request is received from one of the hosts (26) and the response is forwarded to the host (26) requesting access.

14. A storage area network (20) comprising:
at least one switch (60, 80, 100) defining at least one data network(38);
a communication network (36);
a plurality of storage devices (24), each storage device storing data in a storage format;
a plurality of hosts (26), each host connected to at least one storage device (24) through at least one of the at least one data networks (38), each host connected to the communication network (36), each host (26) accessing data in a host format;
**characterized by**
at least one presenter (30) connected to at least one of the at least one data network (38) and the communication network (36), each presenter (30) operative to convert data between at least one storage format and at least one host format; and
at least one manager (32) connected to the communication network (36), each manager (32) operative to process a storage access request.

15. A storage area network (20) as in Claim 14, wherein storage access requests are processed by the at least one manager (32) operative to:
receive a storage access request,
examine at least one of the plurality of storage devices (24),
determine a response to the request based on the examination, and
forward the response.

16. A storage area network (20) as in Claim 14, wherein the at least one manager (32) is further operative to resolve conflicts between multiple hosts (26) requesting access to the same storage device (24).

17. A storage area network (20) as in Claim 14, wherein the at least one manager (32) is further operative to allocate physical space on at least one storage device in response to the received storage access request.

18. A storage area network (20) as in Claim 14, further comprising at least one mover (34) connected to at least one of the at least one data network (38) and to the communication network (36), each mover (34) operative to read data from at least one of the storage devices (24) and write the read data into at least one of the storage devices (24), the at least one manager (32) further operative to:
receive a request from a host (26) to move data,
examine at least one of the plurality of storage devices (24), and
determine at least one mover (34) to perform the data move request.

19. A storage area network (20) as in Claim 18, wherein at least one storage device is connected to at least one network through at least one mover (34).

20. A storage area network (20) as in Claim 14, wherein at least one storage device (24) is connected to at least one network (38) through at least one presenter (30).

21. A storage area network (20) as in Claim 14, wherein at least one host (26) is connected to at least one network (38) through at least one presenter (30).

22. A storage area network (20) as in Claim 20, wherein the manager (32) is further operative to:
receive a request to modify storage allocation from the at least one host (26) connected through at least one presenter (30),
examine at least one of the storage devices (24);
determine allocation of physical space on the at least one of the examined storage devices (24) satisfying the received request to modify storage allocation; and
notify the at least one presenter (30) through which the at least one requesting host (26) is connected of the determined allocation.

23. A storage area network (20) as in Claim 14, wherein the at least one manager (32) is operative to provide a plurality of services to at least one host (26), one of the services being a location service permitting the at least one host (26) to find the remaining services.

24. A storage area network (20) as in Claim 14, further comprising a user interface (40) in communication with the at least one manager (32) through the at least one communication network (36).

## Patentansprüche

1. Speicherbereichsnetz (20), das Folgendes umfasst:
wenigstens ein Zusammenschaltungsnetz (22);
eine Mehrzahl von Speichergeräten (24), wobei jedes Speichergerät (24) mit wenigstens einem der ein oder mehreren Zusammenschaltungsnetze (22) verbunden ist;
eine Mehrzahl von Hostcomputersystemen (26), wobei jeder Host (26) mit wenigstens einem der ein oder mehreren Zusammenschaltungsnetze (22) verbunden ist, wobei jeder Host (26) die Funktion hat, auf Daten auf wenigstens einem der Speichergeräte (24) in einem vorgegebenen Datenformat zuzugreifen, und **gekennzeichnet durch**:
wenigstens einen Präsentierer (30), der mit wenigstens einem der ein oder mehreren Zusammenschaltungsnetze (22) verbunden ist, wobei jeder Präsentierer (30) die Funktion hat, Daten wenigstens einem Hostcomputersystem (26) in dem vom Hostcomputer vorgegebenen Datenformat zu präsentieren; und
wenigstens einen Manager (32), der mit wenigstens einem der ein oder mehreren Zusammenschaltungsnetze (22) verbunden ist, wobei jeder Manager (32) die Funktion hat, eine Speicherzugriffsanforderung zu verarbeiten.

2. Speicherbereichsnetz (20) nach Anspruch 1, bei dem Speicherzugriffsanforderungen von dem wenigstens einen Manager (32) verarbeitet werden, der die folgenden Funktionen hat:
Empfangen einer Speicherzugriffsanforderung,
Untersuchen von wenigstens einem aus der Mehrzahl von Speichergeräten (24),
Ermitteln einer Antwort auf die Anforderung auf der Basis der Untersuchung und Weiterleiten der Antwort.

3. Speicherbereichsnetz (20) nach Anspruch 1, bei dem der wenigstens eine Manager (32) ferner die Funktion hat, Konflikte zwischen mehreren Hosts (26) zu lösen, die einen Zugriff auf dasselbe Speichergerät (24) anfordern.

4. Speicherbereichsnetz (20) nach Anspruch 1, bei dem der wenigstens eine Manager (32) ferner die Funktion hat, physikalischen Raum auf wenigstens einem Speichergerät (24) als Reaktion auf die empfangene Speicherzugriffsanforderung zuzuweisen.

5. Speicherbereichsnetz (20) nach Anspruch 1, ferner umfassend wenigstens einen Umsetzer (34), der mit wenigstens einem der ein oder mehreren Zusammenschaltungsnetze verbunden ist, wobei jeder Umsetzer (34) die Funktion hat, Daten von wenigstens einem der Speichergeräte (24) zu lesen und die gelesenen Daten in wenigstens eines der Speichergeräte (24) zu schreiben, wobei der wenigstens eine Manager (32) ferner die folgenden Funktionen hat:
Empfangen einer Anforderung zum Umsetzen von Daten,
Untersuchen von wenigstens einem aus der Mehrzahl von Speichergeräten (24); und
Ermitteln von wenigstens einem Umsetzer (34) für die Ausführung der Datenumsetzungsanforderung.

6. Speicherbereichsnetz (20) nach Anspruch 5, bei dem wenigstens ein Speichergerät (24) mit wenigstens einem Netz (22) durch wenigstens einen Umsetzer (34) verbunden ist.

7. Speicherbereichsnetz (20) nach Anspruch 1, bei dem wenigstens ein Speichergerät (24) mit wenigstens einem Netz (22) durch wenigstens einen Präsentierer (30) verbunden ist.

8. Speicherbereichsnetz (20) nach Anspruch 1, bei dem wenigstens ein Host (26) mit wenigstens einem Netz (22) durch wenigstens einen Präsentierer (30) verbunden ist.

9. Speicherbereichsnetz (20) nach Anspruch 8, bei dem der Manager (32) ferner die folgenden Funktionen hat:
Empfangen einer Anforderung zum Modifizieren einer Speicherzuweisung von dem wenigstens einen Host (26), der durch wenigstens einen Präsentierer (30) verbunden ist;
Untersuchen von wenigstens einem der Speichergeräte (24);
Ermitteln der Zuweisung von physikalischem Raum auf dem wenigstens einen untersuchten Speichergerät (24), das die empfangene Anforderung zum Modifizieren der Speicherzuweisung erfüllt; und
Informieren des wenigstens einen Präsentierers (30), durch den der wenigstens eine anfordernde Host verbunden ist, über die ermittelte Zuweisung.

10. Speicherbereichsnetz (20) nach Anspruch 1, bei dem das wenigstens eine Zusammenschaltungsnetz (22) Folgendes umfasst:
wenigstens ein Datennetz (38) mit der Funktion, Daten zwischen den Hosts (26) und den Speichergeräten (24) zu führen; und
wenigstens ein Kommunikationsnetz (36) mit der Funktion, die Speicherzugriffsanforderung zu dem Manager (32) zu transportieren.

11. Speicherbereichsnetz (20) nach Anspruch 10, ferner umfassend eine Benutzeroberfläche (40) in Kommunikation mit dem wenigstens einen Manager (32) durch das wenigstens eine Kommunikationsnetz (36).

12. Speicherbereichsnetz (20) nach Anspruch 1, bei dem der wenigstens eine Manager (32) die Funktion hat, eine Mehrzahl von Diensten wenigstens einem Host (26) bereitzustellen, wobei einer der Dienste ein Suchdienst ist, mit dem der wenigstens eine Host (26) die übrigen Dienste finden kann.

13. Speicherbereichsnetz (20) nach Anspruch 1, bei dem die Speicherzugriffsanforderung von einem der Hosts (26) empfangen wird und die Antwort zu dem den Zugriff anfordernden Host (26) weitergeleitet wird.

14. Speicherbereichsnetz (20), das Folgendes umfasst:
wenigstens eine Schalteinrichtung (60, 80, 100), die wenigstens ein Datennetz (38) definiert;
ein Kommunikationsnetz (36);
eine Mehrzahl von Speichergeräten (24), wobei jedes Speichergerät Daten in einem Speicherformat speichert;
eine Mehrzahl von Hosts (26), wobei jeder Host mit wenigstens einem Speichergerät (24) durch wenigstens eines der ein oder mehreren Datennetze (28) verbunden ist, wobei jeder Host mit dem Kommunikationsnetz (36) verbunden ist, wobei jeder Host (26) auf Daten in einem Host-Format zugreift;
**gekennzeichnet durch**
wenigstens einen Präsentierer (30), der mit wenigstens einem der ein oder mehreren Datennetze (38) und mit dem Kommunikationsnetz (36) verbunden ist, wobei jeder Präsentierer (30) die Funktion hat, Daten zwischen wenigstens einem Speicherformat und wenigstens einem Host-Format zu konvertieren; und
wenigstens einen Manager (32), der mit dem Kommunikationsnetz (36) verbunden ist, wobei jeder Manager (32) die Funktion hat, eine Speicherzugriffsanforderung zu verarbeiten.

15. Speicherbereichsnetz (20) nach Anspruch 14, bei dem Speicherzugriffsanforderungen von dem wenigstens einen Manager (32) verarbeitet werden, der die folgenden Funktionen hat:
Empfangen einer Speicherzugriffsanforderung,
Untersuchen von wenigstens einem aus der Mehrzahl von Speichergeräten (24),
Ermitteln einer Antwort auf die Anforderung auf der Basis der Untersuchung, und
Weiterleiten der Antwort.

16. Speicherbereichsnetz (20) nach Anspruch 14, bei dem der wenigstens eine Manager (32) ferner die Funktion hat, Konflikte zwischen mehreren Hosts (26) zu lösen, die einen Zugriff auf dasselbe Speichergerät (24) anfordern.

17. Speicherbereichsnetz (20) nach Anspruch 14, bei dem der wenigstens eine Manager (32) ferner die Funktion hat, physikalischen Raum auf wenigstens einem Speichergerät als Reaktion auf die empfangene Speicherzugriffsanforderung zuzuweisen.

18. Speicherbereichsnetz (20) nach Anspruch 14, ferner umfassend wenigstens einen Umsetzer (34), der mit wenigstens einem der ein oder mehreren Datennetze (38) und mit dem Kommunikationsnetz (38) verbunden ist, wobei jeder Umsetzer (34) die Funktion hat, Daten von wenigstens einem der Speichergeräte (24) zu lesen und die gelesenen Daten in wenigstens eines der Speichergeräte (24) zu schreiben, wobei der wenigstens eine Manager (32) ferner die folgenden Funktionen hat:
Empfangen einer Anforderung von einem Host (26) zum Umsetzen von Daten,
Untersuchen von wenigstens einem aus der Mehrzahl von Speichergeräten (24); und
Ermitteln von wenigstens einem Umsetzer (34) für die Ausführung der Datenumsetzungsanforderung.

19. Speicherbereichsnetz (20) nach Anspruch 18, bei dem wenigstens ein Speichergerät mit wenigstens einem Netz durch wenigstens einen Umsetzer (34) verbunden ist.

20. Speicherbereichsnetz (20) nach Anspruch 14, bei dem wenigstens ein Speichergerät (24) mit wenigstens einem Netz (38) durch wenigstens einen Präsentierer (30) verbunden ist.

21. Speicherbereichsnetz (20) nach Anspruch 14, bei dem wenigstens ein Host (26) mit wenigstens einem Netz (38) durch wenigstens einen Präsentierer (30) verbunden ist.

22. Speicherbereichsnetz (20) nach Anspruch 20, bei dem der Manager (32) ferner die folgenden Funktionen hat:
Empfangen einer Anforderung zum Modifizieren einer Speicherzuweisung von dem wenigstens einen Host (26), der durch wenigstens einen Präsentierer (30) verbunden ist;
Untersuchen von wenigstens einem der Speichergeräte (24);
Ermitteln der Zuweisung von physikalischem Raum auf dem wenigstens einen der untersuchten Speichergeräte (24), das die empfangene Anforderung zum Modifizieren der Speicherzuweisung erfüllt; und
Informieren des wenigstens einen Präsentierers (30), durch den der wenigstens eine anfordernde Host verbunden ist, über die ermittelte Zuweisung.

23. Speicherbereichsnetz (20) nach Anspruch 14, bei dem der wenigstens eine Manager (32) die Funktion hat, eine Mehrzahl von Diensten wenigstens einem Host (26) bereitzustellen, wobei einer der Dienste ein Suchdienst ist, mit dem der wenigstens eine Host (26) die übrigen Dienste finden kann.

24. Speicherbereichsnetz (20) nach Anspruch 14, ferner umfassend eine Benutzeroberfläche (40) in Kommunikation mit dem wenigstens einen Manager (32) durch das wenigstens eine Kommunikationsnetz (36).

## Revendications

1. Réseau de zones de mémorisation (20) comprenant :
au moins un réseau d'interconnexion (22) ;
une pluralité de dispositifs de mémorisation (24), chaque dispositif de mémorisation (24) étant connecté à au moins un du au moins un réseau d'interconnexion (22) ;
une pluralité de systèmes informatiques hôtes (26), chaque hôte (26) étant connecté à au moins un du au moins un réseau d'interconnexion (22), chaque hôte (26) fonctionnant pour solliciter des données sur au moins un des dispositifs de mémorisation (24) dans un format de données spécifié, et
**caractérisé par** :
au moins un présentateur (30) connecté à au moins un du au moins un réseau d'interconnexion (22), chaque présentateur (30) fonctionnant pour présenter des données à au moins un système informatique hôte (26) dans le format de données spécifié de l'ordinateur hôte ; et
au moins un gestionnaire (32) connecté à au moins un du au moins un réseau d'interconnexion (22), chaque gestionnaire (32) fonctionnant pour traiter une demande d'accès à la mémoire.

2. Réseau de zones de mémorisation (20) selon la revendication 1, dans lequel des demandes d'accès à la mémoire sont traitées par le au moins un gestionnaire (32) fonctionnant pour :
recevoir une demande d'accès à la mémoire,
examiner au moins un de la pluralité de dispositifs de mémorisation (24),
déterminer une réponse à la demande en fonction de l'examen, et transmettre la réponse.

3. Réseau de zones de mémorisation (20) selon la revendication 1, dans lequel le au moins un gestionnaire (32) fonctionne en outre pour résoudre des conflits entre des hôtes multiples (26) demandant l'accès au même dispositif de mémorisation (24).

4. Réseau de zones de mémorisation (20) selon la revendication 1, dans lequel le au moins un gestionnaire (32) fonctionne en outre pour attribuer un espace physique sur au moins un dispositif de mémorisation (24) en réponse à la demande d'accès à la mémoire reçue.

5. Réseau de zones de mémorisation (20) selon la revendication 1, comprenant en outre au moins un déménageur (34) connecté à au moins un du au moins un réseau d'interconnexion, chaque déménageur (34) fonctionnant pour lire des données depuis au moins un des dispositifs de mémorisation (24) et écrire les données de lecture dans au moins un des dispositifs de mémorisation (24), le au moins un gestionnaire (32) fonctionnant en outre pour :
recevoir une demande de déplacement de données,
examiner au moins un de la pluralité de dispositifs de mémorisation (24) ; et
déterminer au moins un déménageur (34) pour exécuter la demande de déplacement de données.

6. Réseau de zones de mémorisation (20) selon la revendication 5, dans lequel au moins un dispositif de mémorisation (24) est connecté à au moins un réseau (22) par le biais d'au moins un déménageur (34).

7. Réseau de zones de mémorisation (20) selon la revendication 1, dans lequel au moins un dispositif de mémorisation (24) est connecté à au moins un réseau (22) par le biais d'au moins un présentateur (30).

8. Réseau de zones de mémorisation (20) selon la revendication 1, dans lequel au moins un hôte (26) est connecté au au moins un réseau (22) par le biais d'au moins un présentateur (30).

9. Réseau de zones de mémorisation (20) selon la revendication 8, dans lequel le gestionnaire (32) fonctionne en outre pour :
recevoir une demande de modification d'attribution de mémoire depuis le au moins un hôte (26) connecté par le biais d'au moins un présentateur (30) ;
examiner au moins un des dispositifs de mémorisation (24),
déterminer l'attribution d'espace physique sur le au moins un dispositif de mémorisation examiné (24) satisfaisant à la demande reçue de modification d'attribution de mémoire, et
notifier le au moins un présentateur (30) par le biais duquel le au moins un hôte demandeur est connecté de l'attribution déterminée.

10. Réseau de zones de mémorisation (20) selon la revendication 1, dans lequel le au moins un réseau d'interconnexion (22) comprend :
au moins un réseau de données (38) fonctionnant pour acheminer des données entre les hôtes (26) et les dispositifs de mémorisation (24) ; et
au moins un réseau de communication (36) fonctionnant pour transporter la demande d'accès à la mémoire au gestionnaire (32).

11. Réseau de zones de mémorisation (20) selon la revendication 10, comprenant en outre une interface d'utilisateur (40) en communication avec le au moins un gestionnaire (32) par le biais du au moins un réseau de communication (36).

12. Réseau de zones de mémorisation (20) selon la revendication 1, dans lequel le au moins un gestionnaire (32) fonctionne pour fournir une pluralité de services à au moins un hôte (26), un des services étant un service de positionnement permettant au au moins un hôte (26) de trouver les services restants.

13. Réseau de zones de mémorisation (20) selon la revendication 1, dans lequel la demande d'accès à la mémoire est reçue depuis l'un des hôtes (26) et la réponse est transmise à l'hôte (26) demandant l'accès.

14. Réseau de zones de mémorisation (20) comprenant :
au moins un commutateur (60, 80, 100) définissant au moins un réseau de données (38) ;
un réseau de communication (36) ;
une pluralité de dispositifs de mémorisation (24), chaque dispositif de mémorisation mémorisant des données dans un format de mémorisation ;
une pluralité d'hôtes (26), chaque hôte étant connecté à au moins un dispositif de mémorisation (24) par le biais d'au moins un du au moins un réseau de données (38), chaque hôte étant connecté au réseau de communication (36), chaque hôte (26) sollicitant des données dans un format d'hôte ;
**caractérisé par** :
au moins un présentateur (30) connecté à au moins un du au moins un réseau de données (38) et au réseau de communication (36), chaque présentateur (30) fonctionnant pour convertir des données entre au moins un format de mémorisation et au moins un format d'hôte ; et
au moins un gestionnaire (32) connecté au réseau de communication (36), chaque gestionnaire (32) fonctionnant pour traiter une demande d'accès à la mémoire.

15. Réseau de zones de mémorisation (20) selon la revendication 14, dans lequel des demandes d'accès à la mémoire sont traitées par le au moins un gestionnaire (32) fonctionnant pour :
recevoir une demande d'accès à la mémoire,
examiner au moins un de la pluralité de dispositifs de mémorisation (24),
déterminer une réponse à la demande en fonction de l'examen, et
transmettre la réponse.

16. Réseau de zones de mémorisation (20) selon la revendication 14, dans lequel le au moins un gestionnaire (32) fonctionne en outre pour résoudre des conflits entre des hôtes multiples (26) demandant l'accès au même dispositif de mémorisation (24).

17. Réseau de zones de mémorisation (20) selon la revendication 14, dans lequel le au moins un gestionnaire (32) fonctionne en outre pour attribuer un espace physique sur au moins un dispositif de mémorisation en réponse à la demande d'accès à la mémoire reçue.

18. Réseau de zones de mémorisation (20) selon la revendication 14, comprenant en outre au moins un déménageur (34) connecté à au moins un du au moins un réseau de données (38) et au réseau de communication (36), chaque déménageur (34) fonctionnant pour lire des données depuis au moins un des dispositifs de mémorisation (24) et écrire les données de lecture dans au moins un des dispositifs de mémorisation (24), le au moins un gestionnaire (32) fonctionnant en outre pour :
recevoir depuis un hôte (26) une demande de déplacement de données,
examiner au moins un de la pluralité de dispositifs de mémorisation (24), et
déterminer au moins un déménageur (34) pour exécuter la demande de déplacement de données.

19. Réseau de zones de mémorisation (20) selon la revendication 18, dans lequel au moins un dispositif de mémorisation est connecté à au moins un réseau par le biais d'au moins un déménageur (34).

20. Réseau de zones de mémorisation (20) selon la revendication 14, dans lequel au moins un dispositif de mémorisation (24) est connecté à au moins un réseau (38) par le biais d'au moins un présentateur (30).

21. Réseau de zones de mémorisation (20) selon la revendication 14, dans lequel au moins un hôte (26) est connecté à au moins un réseau (38) par le biais d'au moins un présentateur (30).

22. Réseau de zones de mémorisation (20) selon la revendication 20, dans lequel le gestionnaire (32) fonctionne en outre pour :
recevoir une demande de modification d'attribution de mémoire depuis le au moins un hôte (26) connecté par le biais d'au moins un présentateur (30) ;
examiner au moins un des dispositifs de mémorisation (24) ;
déterminer l'attribution d'espace physique sur le au moins des dispositifs de mémorisation examinés (24) satisfaisant à la demande reçue de modification d'attribution de mémoire ; et
notifier le au moins un présentateur (30) par le biais duquel le au moins un hôte demandeur (26) est connecté de l'attribution déterminée.

23. Réseau de zones de mémorisation (20) selon la revendication 14, dans lequel le au moins un gestionnaire (32) fonctionne pour fournir une pluralité de services à au moins un hôte (26), un des services étant un service de positionnement permettant au au moins un hôte (26) de trouver les services restants.

24. Réseau de zones de mémorisation (20) selon la revendication 14, comprenant en outre une interface d'utilisateur (40) en communication avec le au moins un gestionnaire (32) par le biais du au moins un réseau de communication (36).
